# EUROPEAN PATENT SPECIFICATION

(11) **EP 2 542 087 B1**
(45) Date of publication and mention of the grant of the patent: **02.11.2016**
(21) Application number: 11705991.5
(22) Date of filing: 28.02.2011
(51) Int. Cl.: A01P 1/00, A01N 55/00, A01N 33/12

(54) **BIOCIDAL COMPOSITION AND METHOD**
BIOZIDE VERBINDUNG UND VERFAHREN
COMPOSITION BIOCIDE ET METHODE

(30) Priority: 03.03.2010 GB 201003531
(43) Date of publication of application: 09.01.2013
(73) Proprietor: Arcis Biotechnology Holdings Limited, Daresbury Warrington Cheshire WA4 4AB (GB)
(72) Inventor: GARNER, George, Victor, Stockport SK3 8TL (GB)
(74) Representative: Appleyard Lees IP LLP
(86) International application number: PCT/GB2011/050394
(87) International publication number: WO 2011/107781

(56) References cited:
- WO-A2-2006/065318
- WO-A2-2006/086271
- US-A1- 2002 111 282
- US-A1- 2007 048 356
- US-A1- 2007 048 358
- US-A1- 2007 163 964

## Description

The present invention relates to biocidal compositions and to methods and uses relating thereto. In particular the invention relates to biocidal compositions for application to surfaces which have long lasting efficacy and which can be applied in aqueous solution.

The treatment of surfaces with a biocidal composition is well known and is carried out for very many purposes. In medical applications it is very common to treat surfaces, for example in hospitals, to prevent infection. Many people choose to treat surfaces in their homes with biocidal compositions, particularly if living with an individual having a compromised immune system or who is otherwise susceptible to infection. Biocidal compositions may be used to treat bodily surfaces, food preparation surfaces and very many other surfaces to prevent infection, as will be readily appreciated by the person skilled in the art.

An important aspect of infection control is efficient cleaning, that is the removal of soils, biofilms and the like, in combination with high biocidal activity.

A problem with many biocidal compositions of the prior art is that while they kill pathogens already present on a surface they do not prevent reinfection with new pathogens. Those which do are often only effective for short periods and repeated application to a surface is needed at regular intervals. Some biocidal compositions are effective for periods of less than 6 hours, less than 4 hours or even less than 1 hour.

One biocide known to be effective for long periods when applied to a surface has the formula shown in figure (I):

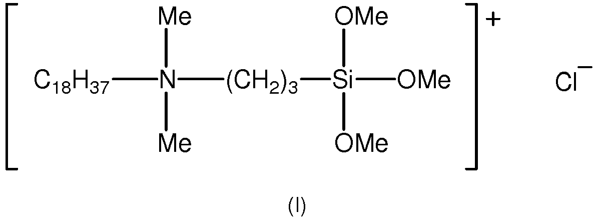

However this compound is of limited stability in aqueous solution which reduces its utility. The limited stability is believed to be due to hydrolysis of the Si-OMe bonds and self-condensation. The compound is stable in the presence of methanol but the use of methanol can cause toxicity problems in some applications.

US 2007/0048358 describes a synergistic antimicrobial composition comprising at least two kinds of antimicrobial agents, including PHMB, stability associated to a material substrate.

It is an aim of the present invention to provide a biocidal composition which overcomes at least one disadvantage of biocidal compositions of the prior art whether specifically mentioned herein or not.

According to a first aspect of the present invention there is provided an aqueous biocidal composition comprising:
(a) a compound of formula (II): 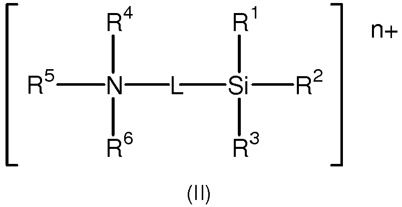 or a salt thereof wherein L is a linking group; each of R¹, R² and R³ is independently selected from an optionally substituted alkyl, alkenyl, aryl or alkoxy group; R⁴ is oxygen or an optionally substituted alkyl, alkenyl or aryl group; each of R⁵ and R⁶ is an optionally substituted alkyl, alkenyl or aryl group; and n is 0 or 1;
(b) a hydrocarbyl - saccharide compound; and
(c) at least one cationic biocide; and one or more non-ionic surfactants;
wherein the molar ratio of component (b) to component (a) is at least 0.5:1, and wherein component (c) comprises a quaternary ammonium salt and a guanidine based compound; and L is a group of formula (CH₂)n wherein n is from 2 to 5. It will be appreciated that in embodiments in which n is 1, the species shown in formula (II) is a cationic species.

In such embodiments the species of formula (II) will be present as an adduct or salt including a suitable counterion. However for ease of reference, in this document we may make general reference to compounds of formula (II) and any such reference includes where appropriate any counterion which must be present.

Any suitable counterion may be used. Monovalent counterions are preferred. Suitable counterions include halides and oxyhalo ions for example chloride, bromide, bromite, chlorite, hypochlorite, chlorate, bromate and iodate.

In embodiments in which R⁴ is O, the compound has the structure shown in formula (III) and n is 0:

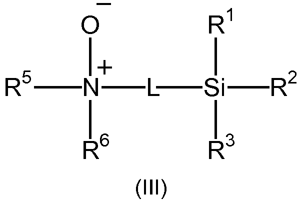

In preferred embodiments in which R⁴ is not O, n is 1 and a suitable counterion is present.

In preferred embodiments R⁴ is not oxygen and the compound of formula (II) is preferably a quaternary ammonium salt.

In this specification any optionally substituted alkyl, alkenyl, aryl or alkoxy group may be optionally substituted with one or more substituents selected from halo, hydroxy, nitro, mercapto, amino, alkyl, alkoxy, aryl, sulfo and sulfoxy.

Preferred substituents which may be present in the alkyl, alkenyl, aryl or alkoxy groups defined herein are halogens, in particular fluorine. In particular each of R¹, R², R³, R⁴, R⁵ or R⁶ may comprise fluoroalkyl or fluoroalkoxy groups in which one or more hydrogen atoms are substituted with fluorine.

Each of R¹, R² and R³ is independently selected from an optionally substituted alkyl, alkenyl, aryl or alkoxy group. Preferably at least one of R¹, R² and R³ is an optionally substituted alkoxy group. More preferably each of R¹, R² and R³ is an optionally substituted alkoxy group, most preferably each is an unsubstituted alkoxy group. The alkyl group of the alkoxy group may be straight chained or branched. Preferably each of R¹, R² and R³ is an alkoxy group having from 1 to 20 carbon atoms, preferably from 1 to 16 carbon atoms, more preferably from 1 to 12 carbon atoms, preferably from 1 to 8 carbon atoms, suitably from 1 to 6 carbon atoms, more preferably from 1 to 4 carbon atoms.

In preferred embodiments each of R¹, R² and R³ is independently selected from methoxy, ethoxy, propoxy, butoxy and isomers thereof. Most preferably each of R¹, R² and R³ is selected from methoxy, ethoxy and isopropoxy. Preferably each of R¹, R² and R³ is selected from methoxy and ethoxy. Most preferably each of R¹, R² and R³ is methoxy. Preferably each of R¹, R² and R³ is the same.

In embodiments in which R¹, R² and R³ are substituted alkoxy they are preferably fluoro substituted alkoxy in which all of the hydrogen atoms have been replaced with fluorine atoms. Thus in some embodiments each of R¹, R² and R³ may be independently selected from trifluoromethoxy, pentafluoroethoxy, heptafluoropropoxy, nonafluorobutoxy and isomers thereof.

R⁴ may be oxygen or an optionally substituted alkyl, alkenyl, or aryl group. Preferably R⁴ is an optionally substituted alkyl group.

R⁴ is preferably an alkyl group or a fluoro-alkyl group. When R⁴ is a fluoroalkyl group it is preferably an alkyl group in which all of the hydrogen atoms have been replaced by fluorine. These may be referred to as perfluoro-alkyl groups. Preferred fluoroalkyl groups are those having from 1 to 20 carbon atoms, preferably 1 to 16 carbon atoms, more preferably 1 to 12 carbon atoms, preferably 1 to 8 carbon atoms, for example 1 to 6 carbon atoms, most preferably 1 to 4 carbon atoms. Preferred fluoroalkyl groups are trifluoromethyl, pentafluoroethyl, heptafluoropropyl, nonafluorobutyl and isomers thereof. Nonafluorobutyl is especially preferred.

Preferably R⁴ is an alkyl group, most preferably an alkyl group having 1 to 24 carbon atoms, preferably 1 to 18 carbon atoms, more preferably 1 to 12 carbon atoms, suitably 1 to 8 carbon atoms, more preferably 1 to 4 carbon atoms. Most preferably R⁴ is selected from methyl, ethyl, propyl, butyl and isomers thereof. More preferably R⁴ is selected from ethyl and methyl. Most preferably R⁴ is methyl.

Each of R⁵ and R⁶ may be independently selected from an optionally substituted alkyl, alkenyl or aryl group.

Most preferably each of R⁵ and R⁶ is an optionally substituted alkyl group. Each of R⁴, R⁵ and R⁶ may be a fluoroalkyl group in which some or preferably all of the hydrogen atoms have been replaced by fluorine atoms. Preferred fluoroalkyl groups are those having from 1 to 20 carbon atoms, preferably 1 to 16 carbon atoms, more preferably 1 to 12 carbon atoms, for example 1 to 10 carbon atoms.

In embodiments in which each of R⁵ and R⁶ is fluoroalkyl, each may be a fluoroalkyl group having 4 to 10 carbon atoms, for example 8 carbon atoms.

In some preferred embodiments each of R⁵ and R⁶ is an alkyl group, suitably an unsubstituted alkyl group. The alkyl group may be straight chained or branched. In such embodiments R⁵ is preferably an alkyl group having more than 8 carbon atoms and R⁶ is preferably an alkyl group having less than 8 carbon atoms.

Preferably R⁵ is an alkyl group having from 8 to 30 carbon atoms, for example from 10 to 26 carbon atoms, suitably from 12 to 24 carbon atoms, preferably from 14 to 22 carbon atoms, suitably from 16 to 20 carbon atoms, for example 17 to 19 carbon atoms, suitably 18 carbon atoms.

R⁶ is preferably an alkyl group having from 1 to 8 carbon atoms, most preferably 1 to 6 carbon atoms, more preferably 1 to 4 carbon atoms. R⁶ may suitably be selected from methyl, ethyl, propyl, butyl and isomers thereof. Preferably R⁶ is methyl or ethyl. Most preferably R⁶ is methyl.

L is a linking group. L is an unsubstituted alkylene group having 2 to 5 carbon atoms, for example 2 to 4 carbon atoms. In especially preferred embodiments L is a propylene group.

In especially preferred embodiments of the compound of formula (II), R¹, R² and R³ are each C₁ to C₄ alkoxy, L is a C₂ to C₅ alkylene group, A is nitrogen, R⁴ and R⁶ are each C₁ to C₄ alkyl groups and R⁵ is a C₁₂ to C₂₄ alkyl group.

Most preferably the compound of formula (II) is the compound shown in formula (I). This ccompound is commercially available in a form which is 98% pure or as a solution in methanol.

Component (a) is preferably present in the composition of the present invention in an amount of at least 0.001 wt%, preferably at least 0.01 wt%, more preferably at least 0.05 wt%, preferably at least 0.1 wt%, suitably at least 0.2 wt%, preferably at least 0.3 wt%, preferably at least 0.4 wt%, for example at least 0.5 wt%.

Component (a) may be present in the composition of the present invention in an amount of up to 20 wt%, preferably up to 15 wt%, suitably up to 10 wt%, preferably up to 7.5 wt%, preferably up to 5 wt%, for example up to 4 wt%, preferably up to 3 wt%, for example up to 2 wt%, or up to 1.5 wt%.

Component (a) may comprise a mixture of compounds. In such embodiments the above amounts refer to all such compounds present in the composition.

Component (b) is a hydrocarbyl-saccharide compound. By this we mean to refer to a compound including a hydrocarbyl group and a saccharide moiety.

The hydrocarbyl group may be bound to the saccharide moiety via a carbon-carbon bond or via a carbon-oxygen bond. Preferably it is bound to the saccharide moiety via a carbon-oxygen bond, for example via an ester linkage or an ether linkage. Most preferably it is bound to the oligosaccharide moiety via an ether linkage. Thus in preferred embodiments component (b) is a hydrocarbyl ether of an saccharide moiety.

Component (b) may include one or more hydrocarbyl groups. Preferably it comprises one hydrocarbyl group. The hydrocarbyl group may be an optionally substituted alkyl, alkenyl or alkynylene group. Most preferably it is an optionally substituted alkyl group. Suitable substituents include halo, hydroxy, nitro, mercapto, amino, alkyl, alkoxy, aryl, sulfo and sulfoxy. Any subsubstitution may be within the chain or along it, for example the chain may include an ether linkage.

Preferably the hydrocarbyl group is an unsubstituted alkyl group. It may be straight chained or may be branched. Most preferably it is straight chained. Especially preferred hydrocarbyl groups are alkyl groups having from 1 to 30 carbon atoms, preferably 2 to 24 carbon atoms, more preferably from 4 to 20 carbon atoms, suitably from 4 to 16 carbon atoms, preferably from 6 to 14 carbon atoms, for example from 6 to 12 carbon atoms and most preferably from 8 to 10 carbon atoms. Preferred are straight chained alkyl groups having from 6 to 12 carbon atoms.

The saccharide moiety of the hydrocarbyl oligosaccharide species may include from 1 to 10 monosaccharide species. Thus it may be a monosaccharide unit, a disaccharide unit or an oligosaccharide unit. Preferably the saccharide moiety comprises from 2 to 8, suitably from 2 to 6, preferably from 2 to 5, for example 3 or 4 monosaccharide units. Any suitable monosaccharide unit may be included. Preferred saccharides include allose, altrose, glucose, mannose, gulose, idose, galactose and talose.

Mixtures of two or more monosaccharides may be present in the saccharide moiety. Preferably the saccharide moiety comprises glucose. More preferably all of the monosaccharide units present in the saccharide moiety are glucose. In especially preferred embodiments component (b) comprises an alkylpolyglucoside, preferably a monoalkyl-polyglucoside. Suitably component (b) comprises a compound of formula (IV): 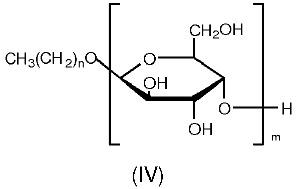 wherein n is from 5 to 12, preferably from 6 to 10, more preferably from 7 to 9 and m is from 1 to 6, preferably from 2 to 5, more preferably 3 or 4.

Component (b) may be present in the composition of the present invention in an amount of at least 0.001 wt%, preferably at least 0.01 wt%, more preferably at least 0.1 wt%, preferably at least 0.25 wt%, suitably at least 0.4 wt%, more preferably at least 0.5 wt%, preferably at least 0.6 wt%.

Component (b) may be present in the composition in an amount of up to 30 wt%, suitably up to 20 wt%, preferably up to 15 wt%, more preferably up to 10 wt%, preferably up to 5 wt%, suitably up to 3 wt%, for example up to 2 wt%, or up to 1.5 wt%.

Component (b) may comprise a mixture of compounds. In such embodiments the above amounts refer to all such components present in the composition.

The molar ratio of component (b) to component (a) is at least 0.5:1. Preferably it is at least 0.6:1, for example at least 0.7:1. The molar ratio of component (b) to component (a) may be up to 10:1, suitably up to 8:1, preferably up to 5:1, for example up to 3:1.

The weight ratio of component (b) to component (a) is preferably from 2:1 to 1:2, more preferably from 1.5:1 to 1:1.5. Suitably it is about 1:1.

Component (c) comprises a quaternary ammonium salt and a guanidine based compound.

For the avoidance of doubt, the cationic biocides of component (c) are present in addition to component (a). Compounds of formula (II) are known to have biocidal properties. Component (a) may provide some biocidal activity in the compositions of the present invention.

However the primary purpose for the inclusion of component (a) in the compositions of the present invention is as a binding agent. It is believed that the siloxy group present in this compound enables it to bind to the surface, and the hydrophobic tail and quaternary ammonium group help direct other biocidal compounds present in the composition to the surface, as will be later described in more detail.

Preferably the composition comprises at least 0.001 wt% of cationic biocide component (c), preferably at least 0.01 wt%, more preferably at least 0.05 wt%, preferably at least 0.1 wt%, suitably at least 0.25 wt%, preferably at least 0.5 wt%, more preferably at least 0.7 wt%, suitably at least 0.9 wt%, preferably at least 1 wt%.

The composition suitably comprises up to 10 wt% cationic biocide component (c), suitably up to 7.5 wt%, preferably up to 5 wt%, for example up to 3 wt%.

A mixture of two or more cationic biocide components may be present in component (c) of the compositions of the present invention. In such embodiments the above amounts refer to all such cationic biocides present. Component (c) comprises at least two cationic biocides.

Suitable quaternary ammonium cationic biocides have the structure shown in formula (V): 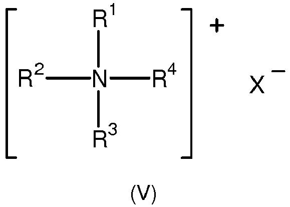 where each of R¹, R², R³ and R⁴ is an optionally substituted alkyl, alkenyl, alkylaryl or aryl group and X⁻ is a suitable anion. Preferably each of R¹, R², R³ and R⁴ is an optionally substituted alkyl or alkylaryl group, more preferably an unsubstituted alkyl or alkylaryl group.

Any suitable anion X⁻ may be used. X may be selected from halide, acetate, nitrite, a lower alkyl sulfate, carbonate or alkyl carboxylate. Preferably X is chloride or bromide.

Each of R¹, R², R³ and R⁴ may be an unsubstituted alkyl group having from 1 to 30 carbon atoms or an alkylaryl group, for example a benzyl group.

Preferably at least one of R¹, R², R³ and R⁴ is an unsubstituted alkyl group having at least 6 carbon atoms, preferably at least 8 carbon atoms.

In one preferred embodiment R¹ is an alkyl group having from 6 to 30 carbon atoms, preferably from 8 to 24 carbon atoms, suitably from 8 to 20 carbon atoms, for example from 10 to 18 carbon atoms and most preferably from 12 to 16 carbon atoms; each of R² and R³ is an alkyl group having from 1 to 4 carbon atoms, preferably methyl and R⁴ is an alkylaryl group, preferably benzyl. Thus a particularly preferred cationic biocide for use herein is a benzyldimethylalkyl ammonium chloride or bromide in which the alkyl group has from 12 to 16 carbon atoms. The skilled person will appreciate that such compounds may often be present as a mixture of homologues.

In another preferred embodiment the cationic biocide of formula (VI) is one in which each of R¹ and R² is an alkyl group having from 6 to 20 carbon atoms, preferably from 6 to 16 carbon atoms, suitably from 8 to 12 carbon atoms, for example from 8 to 10 carbon atoms; and R³ and R⁴ is each an alkyl group having 1 to 4 carbon atoms, preferably methyl. One especially preferred cationic biocide for use herein is didecyldimethyl ammonium chloride or bromide.

Suitably the composition of the present invention comprises from 0.01 to 5 wt% of one or more quaternary ammonium biocides, preferably 0.1 to 4 wt%, more preferably 0.25 to 2.5 wt%, for example from 0.5 to 1.5wt%.

Suitable guanidine derived cationic biocide compounds for use herein include guanidine based compounds, diguanidine based compounds and polymeric guanidine based compounds.

Suitable guanidine based compounds include biguanidine and polymeric guanidine compounds of formula (VI): 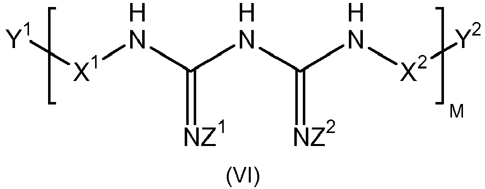 wherein X¹ and X² are either a hydrogen or any aliphatic, cycloaliphatic, aromatic, substituted aliphatic, substituted aromatic, heteroaliphatic, heterocyclic, and/or heteroaromatic compound.

x¹ and X² can be the same or different. Y¹ and Y² are any aliphatic, cycloaliphatic, aromatic, substituted aliphatic, substituted aromatic, heteroaliphatic, heterocyclic, and/or heteroaromatic compound. Y¹ and Y² can be the same or different. M is an number equal to or greater than 1. Typically, M has an average value such that the molecular weight of the biguanide compounds is about 1000-1400; however, the molecular weight can be higher or lower. Generally M is about 2-20. Z¹ and Z² are either a hydrogen or a salt. Z¹ and Z² can be the same of different. In another and/or alternative aspect of this embodiment, the above-mentioned organic materials can be modified to include a thiol group in their structure so as to allow for the bonding of the compound to a metallic substrate, and/or may be derivatized with other functional groups to permit direct immobilization on a non-metallic substrate. In still another and/or alternative aspect of this embodiment, the above-mentioned organic materials may also be suitably functionalized to incorporate groups such as, but not limited to, hydroxy, amine, halogen, epoxy, alkyl and/or alkoxy silyl functionalities to enable direct immobilization to a surface. In yet another and/or alternative aspect of this embodiment, the salt can include, but is not limited to, salts with an inorganic acid such as, but not limited to, hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Specific examples of these compounds include, but are not limited to, polyhexamethylene biguanide hydrochloride, p-chlorophenyl biguanide, and 4-chlorobenzhydryl biguanide. In still yet another and/or alternative aspect of this embodiment, the biguanide compound includes, but is not limited to, halogenated hexidine such as, but not limited to, chlorhexidine (1,1'-hexamethylene-bis-5-(4-chlorophenyl biguanide) and its salts. The salts include, but are not limited to, salts with an inorganic acid, such as hydrochloride, hydrofluoride, nitrate, sulfate and/or phosphate, and/or salts with an organic acid such as, but not limited to, carboxylic acid, acetate, benzoate, tartrate, adipate, lactate, formate, maleate, glutamate, ascorbate, citrate, gluconate, oxalate, succinate, pamoate, salicylate, isethionate, succinamate, mono-diglycollate, dimethanesulfonate, di-isobutyrate, and/or glucoheptonate. Examples of salts of chlorhexidine include, but are not limited to, chlorhexidine diphosphanilate, chlorhexidine digluconate, chlorhexidine diacetate, chlorhexidine dihydrochloride, chlorhexidine dichloride, chlorhexidine gluconate, chlorhexidine dihydroiodide, chlorhexidine diperchlorate, chlorhexidine dinitrate, chlorhexidine sulfate, chlorhexidine sulfite, chlorhexidine thiosulfate, chlorhexidine di-acid phosphate, chlorhexidine difluorophosphate, chlorhexidine diformate, chlorhexidine dipropionate, chlorhexidine di-iodobutyrate, chlorhexidine di-valerate, chlorhexidine dicaproate, chlorhexidine malonate, chlorhexidine succinate, chlorhexidine malate, chlothexidine tartrate, chlorhexidine dimonoglycolate, chlorhexidine monodiglycolate, chlorhexidine dilactate, chlorhexidine di-alpha-hydroxyisobutyrate, chlorhexidine diglucoheptonate, chlorhexidine di-isothionate, chlorhexidine dibenzoate, chlorhexidine dicinnamate, chlorhexidine dimandelate, chlorhexidine di-isophthalate, chlorhexidine di-2-hydroxynapthoate, and chlorhexidine embonate.

Especially preferred diguanidine cationic biocides for use herein include polyhexamethylene biguanide, chlorhexidine and salts and mixtures thereof.

Preferably the composition comprises from 0.01 to 5 wt% of a guanidine based cationic biocide, preferably 0.1 to 3 wt% for example from 0.2 to 1 wt%.

Component (c) of the present invention comprises a quaternary ammonium salt and a guanidine based compound. It is believed that these two cationic biocides may act in a synergistic manner.

In addition to components (a), (b) and (c), the composition of the present invention may further comprise one or more additional biocide components, for example a non-ionic biocide, for example 2-bromo-2-nitro-1,3-dioxane or 2-bromo-2-nitro-propane-1,3-diol.

The composition of the present invention comprises one or more non-ionic surfactants.

The composition of the present invention may further comprise one or more additional surfactants. Suitable surfactants include anionic surfactants, cationic surfactants, non-ionic surfactants, amphoteric surfactants and mixtures thereof.

Suitable surfactants for use herein will be known to the person skilled in the art and include for example the amphoteric and non-ionic surfactants listed in US 2006/166849.

The composition comprises a non-ionic surfactant.

Preferably the composition comprises at least 0.01 wt% non-ionic surfactant, preferably at least 0.1 wt%, more preferably at least 0.5 wt%, suitably at least 1 wt%, for example at least 1.5 wt% or at least 2 wt%. The composition may comprise up to 20 wt% non-ionic surfactant, for example up to 15 wt%, suitably up to 10 wt%, preferably up to 8 wt%, for example up to 6 wt%.

Especially preferred non-ionic surfactants for use herein are alcoholalkoxylate compounds, in particular alcoholethoxylate compounds. Preferred non-ionic surfactants are those of formula CH₃(CCH₂)ₙO(CH₂CH₂O)ₘH wherein n is from 5 to 20, preferably from 6 to 15 and m is from 1 to 12, preferably from 3 to 10.

An especially preferred non-ionic surfactant comprises a mixture of isomers in which n is 9 or 11 and m is 4 to 8.

The composition preferably has a pH of less than 8, preferably from 2 to 7, more preferably from 3 to 6, for example from 4 to 5.

The liquid composition may include one or more viscosity modifiers. It may be of low viscosity or of high viscosity dependent on the intended application. Suitable viscosity modifiers include thickeners known to the person skilled in the art.

In preferred embodiments the composition of the present invention further comprise a dye compound. Any suitable dye may be used. However in especially preferred embodiments the composition includes a fluorescent dye compound. This is a compound which fluoresces under application of ultraviolet light. In the absence of ultraviolet light the dye compound may be coloured or colourless. Preferably it is pale, lightly-coloured or colourless.

In preferred embodiments the composition comprises an anionic fluorescent dye. Such dyes will be well known to the person skilled in the art. A typical class of fluorescent dyes are compound including sulfonate groups. Suitable dyes include naphthalene sulfonates, for example 8-anilino-1-naphthalene sulfonate or similar perisubstituted analogues.

It is advantageous to include a dye compound in the composition of the present invention as following application of the composition to a surface, ultraviolet light can be applied to the surface and the area of the surface which has been treated with the composition will fluoresce under the ultraviolet light. It can be especially useful to include an anionic dye which fluoresces at a different wavelength when bound to a cationic species to when it is unbound. This may provide an indication of the presence of a cationic species with which the dye has formed an electrostatic interaction.

Preferably the dye included in the composition of the present invention has a high extinction coefficient and thus low concentrations of dye may be used.

Suitably the composition of the present invention comprises at least 1 ppm (by weight) of a dye, preferably an anionic fluorescent dye compound, suitably at least 10 ppm, preferably at least 50 pppm, for example at least 100 ppm. The composition may comprise up to 10000 ppm dye, suitably up to 5000 ppm. Preferably up to 1000 ppm, suitably up to 500 ppm, for example up to 300 ppm.

The composition of the present invention may include one or more further ingredients for example a fragrance, colouring agent, preservative or emollient.

The compositions of the present invention are aqueous compositions. Preferably they comprise at least 50 wt% water, preferably 60 wt%, suitably 65 wt%, preferably at least 70 wt%, more preferably at least 75 wt%, for example at least 80 wt%, suitably at least 85 wt% and most preferably at least 90 wt%. In some embodiments the composition may comprise a further solvent preferably a water-miscible solvent. Suitable water-miscible solvents may be present in an amount of up to 10 wt%, suitably up to 7.5 wt%, preferably up to 5 wt%, for example up to 2.5 wt%. Suitable solvents for use herein include alcohols and esters including polyhydric alcohols. Preferred solvents are those which are approved for cosmetic use.

Preferably the compositions of the present invention comprise less than 5wt% monohydric alcohols, especially C1 to C4 mono-hydric alcohols. Suitably the compositions of the present invention comprise less than 1 wt% C1 to C4 monohydric alcohols, preferably less than 0.5 wt %.

Preferably the composition of the present invention comprises less than 5 wt% polysiloxane compounds, preferably less than 1 wt%, more preferably less than 0.1 wt%, for example less than 0.01 wt%, suitably less than 0.001 wt%.

Preferably the composition of the present invention comprises less than 5 wt% urea, preferably less than 2 wt%, more preferably less than 1 wt%, preferably less than 0.1 wt%, for example less than 0.01 wt%.

Preferably the composition of the present invention comprises less than 10 wt% lactic acid, preferably less than 7 wt%, suitably less than 5 wt%, preferably less than 1 wt%, for example less than 0.1 wt% or less than 0.01 wt%.

In preferred embodiments the composition of the present invention comprises:
0.01 to 5 wt% component (a);
0.01 to 5 wt% component (b);
0.1 to 4 wt% quaternary ammonium biocide;
0.1 to 3 wt% guanidine based cationic biocide;
0.5 to 8 wt% non-ionic surfactants; and
1 to 500 ppm dye.

Such a composition would be suitable for most applications. However a mild formulation could be provided for use in domestic environments. Such a mild composition would typically be diluted with water, in a ratio of 1.5:1 to 10:1 (water: composition), preferably from 2:1 to 5:1, for example 3:1.

For ease of transportation a concentrated (for example 2 to 5, typically 3 times) composition or super concentrated (up to 20 times, typically 10 times) composition may be provided.

According to a second aspect of the present invention there is provided a method of combating a pathogen at a locus the method comprising applying to the locus a composition of the first aspect.

Preferred features of the second aspect are as defined in relation to the first aspect.

By a method of combating the pathogen we mean to refer to a method by which pathogenic species present at the locus is killed and/or in which growth of existing pathogenic species is prevented or inhibited and/or in which new pathogenic species are prevented from growing at the locus.

The composition of the present invention may be effective at combating the pathogens selected from bacteria, viruses, fungi, prions, algae and mixtures thereof.

In some embodiments the composition of the present invention may be used to kill bacteria and thus may be regarded as a bacteriacidal composition.

In some embodiments the composition of the present invention may prevent or inhibit the growth of bacteria and thus may be regarded as an antibacterial or bacteriostatic composition.

In some embodiments the composition of the present invention may kill viruses and thus may be regarded as a virucidal composition.

In some embodiments the composition of the present invention may prevent or inhibit the growth of viruses and may be regarded as antiviral composition.

In some embodiments the composition of the present invention may kill fungi and thus may be considered as a fungicidal composition.

In some embodiments the composition may prevent or inhibit the growth of fungi and thus may be regarded as antifungal.

In some embodiments the composition of the present invention may kill algae and/or may prevent or inhibit the growth of algae.

In some embodiments the composition of the present invention may kill prions present at the surface or may restrict or inhibit the attachment of prions. It is believed that compounds of formula (II) in which R⁴ is O are particularly effective for combattng prions.

The composition of the present invention may be applied to the locus by any suitable means. It may be provided in the form of a runny liquid or as a viscous liquid for example as a paste, cream or gel.

The composition may be applied in the form of a spray. It may be applied to the locus using a suitable tool for example a cloth, brush or spatula. It may be applied by the hands of a user.

The composition of the present invention may be used to combat a pathogen at any suitable locus. Preferably the locus is a surface of a substrate. Any suitable surface may be treated.

In embodiments on which the composition comprises a fluorescent dye compound the present invention may further provide a method of detecting whether a surface has been treated with a composition of the first aspect, the method comprising applying ultraviolet light to the surface. Such a method may help identify any gaps in application to a surface. It could also be used to verify that the correct composition has been applied to a surface.

In some embodiments the composition may be applied to a bodily surface. It may be applied to the skin or other bodily surface of a human or other animal. For example the composition may be in the form of a biocidal gel which can be applied to the hands of a user for infection control. It may be used by medical and/or vetinary surgeons - they may apply the composition to their hands or other body surfaces and/or it may be applied to the body of a patient prior to an operation.

The composition may be used in many medical applications. It could be applied to many different surfaces for example the surfaces of: artificial implants, artificial limbs, artificial eyes, bandages, breast implants, body bags, cardboard sick basins, dressings, needles, adhesive tapes, adhesives & glues, braces, cocklear implants, colostomy bags, contact lens, gauzes, glasses, hearing aids, hickman lines, joint replacements, laboratory equipment, laser equipment, medical supplies, medical drip tubes, medical waste disposal, medicine bottles, mouthwash, mobility and access equipment, nose filters, nursing uniforms, surgical gowns, nursing supplies, optical goods, orthapedic goods, pessary, pill packaging, plasters, pregnancy tests, surgical goods, surgical masks, syringes, wheel chairs and x-ray apparatus.

The compositions of the present invention may be used in alternative medicine; by ambulance services; by blood services; by allergists; by bloodstock agencies; by carers; by chiropodists; by chiropractors; in clinics; in colonic hydrotherapy; in convalescent homes; in dental surgery; in elderly care; by emergency services; in eye laser surgery; in foot health; by healthcare authorities; by health & safety consultants; in health screening; by herbalists; by homeopaths; in hospices; by hypnotherapists; in laser eye surgery; in massage; by medical equipment & machinery manufacturers; by medical practicioners; in natural health centres; by nurses agencies & care agencies; by midwives; in nursing homes; by nutritionalists and dieticians; by opticians; by osteopaths; by physicians & surgeons; in physiotherapy; in plastic surgery; in pregnancy & child birth; by psychiatrists; by psychologists; in residential homes; in sexual health; in sports injury clinics; in sports massage; in surgery; in tattoo removal; and in wound repairs.

The compositions of the present invention may be useful in the cosmetic industry, for example it may be used in beauty products, anti wrinkle cream, aromotherapy, cosmetics and toiletries, hand gel, brushes, skin cleanser, soap, spot creams, tissues, toilet tissues, toothpaste, face wash, facial creams, perfume, shampoo, make up remover and shoe odour eaters. It may be used by barbers, hairdressers, beautician suppliers, hair consultants, nail technicians, make up artists, beauty salons and tattooists. It may be used in body piercing, cosmetic surgery, electrolysis and hair removal, for example laser hair removal.

The compositions of the present invention may be applied to surfaces which may be contacted by babies and young children, for example those of or found in: baby goods & services, baby equipment, baby car seats, baby pushchair covers, baby dummies, baby bibs, baby high chairs, baby bottles, baby teats, child car seats, nurseries, creches, childrens & baby clothes, childrens plastic toys, garden play equipment, nappies, nappy bags, nappy bins, nursery schools, nursery equipment, plastic school chairs, playground equipment, prams and teethers.

The composition may be used in animal related applications. As mentioned above it may be used in the field of vetinary medicine. It may also be used in many applications relating to agricultural and domestic animals. It may be used to sanitise surfaces in many animal related fields. For example it may be used in the fields of animal husbandry, cattle breeding, horse supplies, grooming for example cat grooming, aquarium & pond supplies, livestock breeding, livestock carriers, horse breeding, veterinary supplies, pet cremation and cemetries, pig breeding, pet supplies and the keeping of hens, ducks and pigeons. The composition of the present invention may be applied to surfaces found in kennels, catteries, liveries, animal door flaps, pet shops, fish tanks, slaughter houses, udder milkers & piping equipment and horse boxes.

The composition may be used in applications relating to food and drink, for example by brewers, dairy farmers, delicatessens, distillers, bakers & confectioners, cake makers, bottle and jar manufacturers, fishmongers, farmers, egg merchants, ice cream equipment manufacturers, kebab houses, soft drink manufacturers, poultry farmers and packers, meat manufacturers and suppliers, meat wholesalers, fruit and vegetable growers, confectionary manufacturers, butchers, healthfood manufacturers and suppliers, dairy equipment suppliers, food manufacturers, frozen food manufacturers, greengrocers, juice bars, suppliers of halal and kosher food, bakers suppliers, bacon & ham curers, caterers, fruit and vegetable wholesalers and wine makers.

The composition of the present invention may be applied to surfaces relating to the food industry including but not limited to surfaces of or found in dairies, coffee shops, blenders, china and glassware, chopping boards, bakery equipment; cafes, carrier bags, sandwich packaging, catering equipment, cheese packaging, cold bags, clingfilm, coffee machines, cooking utensils, fish & chip shops, food packaging; food processors, fridges and freezers, fruit juice cartons, hot drinks flasks, microwaves, milking machines, pizza boxes, plastic crockery & cutlery, plastic tupperware, plastic spatulas, plastic cereal containers, plastic steamers, wine bars.

The composition of the present invention may be used in general cleaning and/or waste and/or soil removal applications and products. Examples include: car valeting / cleaning, car washes, carpet cleaning, boiler cleaning / servicing, caravan cleaning, cleaning & maintenance services, cleaning products, cleaning wipes, cleansing wipes / pads, clean room panels, conservatories / windows, curtain cleaners, detergents, dishwasher tablets, dry cleaning, dry waste cleaning processes, dust pans and brushes, factory maintenance and cleaning, gutter cleaning, hose manufacturers, hygiene & cleansing services, ironing & laundry services, janitorial supplies, laundrettes, leather cleaning & repair, mops & buckets, nail brushes, office cleaners, oven cleaning, picture cleaners & restorers, recycling, scrap services, tank cleaning & servicing, toilet brushes, vacuum cleaners, valeting, washing powder, wheelie bin cleaning / manufacture, bin bags and sacks, abbatoirs, insectidices / pesticides, air conditioning, clinical waste sanitation (ladies products), condensation control, de-humidifiers, dog waste bags, drain cleaning, flea powder, fumigation services, incinerators, industrial protective clothing, irrigation, municipal waste treatment, odour suppression - waste industry / landfill sites, odour eliminators, pest & vermin control, sewage consultants / septic tanks, sewer pipes, stericycle, toilets, towel supplies, u bends, urinals, urinal tablets, washroom services, waste disposal, water treatment, waste disposal units, hdpe plastic bins (commercial & residential) and stone cleaners and restorers.

The composition of the present invention may be used in the construction industry, for example in building materials, cavity wall insulation, asbestos removal, asphalt and tarmac, brick manufacture, concrete products, damp proofing & control, decking, underwater rubber seals, upvc, granite manufacture, guttering / soffits / fascias, insulation materials, joinery; interior decorating, marquees, nails, paving & driveways plumbing, roofing materials, rot proofing, tiling, timber and tools.

The composition of the present invention may be applied to a wide variety of household surfaces. These include but are not limited to surfaces of or found in: bath surfaces; bath mats; bathroom equipment; bedroom furniture; carpets; audio visual products including headphones; blinds; canvas goods; carrier bags; cartons; central heating equipment; ceramic products / tiles; glass / metal / plastic containers; clothing; curtains; door handles; door bells; earphones; earplugs; fabrics; fishing flooring materials; furniture; garage doors; garden equipment / furniture; garden ornaments; garden fencing; garden machinery; glass tiles; greenhouses; gym equipment; handrails; headphones; kitchen equipment; kitchen furniture; laminate & wooden floors; laptop computer keyboards; laser printers; lawns, libraries; lighting; light switches / sockets; linoleum flooring; locks; marble; mattresses; memorabilia; ovens; paper products; paints; plasterboards; plastering; plastics; plastic biros; plastic calculators; plastic tables; collectors items; plastic shelving; polystyrene; polythene; shower doors & frames; soft furnishings; soles of shoes; summer houses; taps; telephone handsets; thermometers; toilet seats; wallpaper; washing machine pipes; vases; water pipes; windows and wine storage.

The composition of the present invention may be applied to fabrics, items of clothing and the like, for example: gloves, lingerie & hoisery, leisurewear, medals, mens wear, shoes, slippers, linen and underwear.

The composition of the present invention may be applied to a wide variety of surfaces relating to the transport industry. These include but are not limited to surfaces of or found in: aircraft or airline surfaces; car accessories / products; coaches; marinas; underground train interiors; lorries; hot air balloons; train travel; ticket machines; mini buses; lifeboats and rafts; limouisines; vehicle interiors; railway handles and straps; vans and trucks.

The composition of the present invention may be applied to a wide variety of surfaces relating to the leisure industry. These include but are not limited to surfaces of or found in: holiday accommodation; bar fixtures; arts & craft products; camping equipment; cinemas; florists; market gardens; monuments; musical recorders; sex aids; spas & whirlpools; squash courts; self storage; sunbeds; sunbed equipment; swimming pools; swimming pool linings; toning tables; trainers; vending machines; youth hostels; yacht clubs; ropes; ruck sacks; saunas and steamrooms; scuba diving equipment; tackle boxes; amusement arcades; hots tubs and spas / jacuzzi / sauna / steam rooms; hostels; hotels & inns; cruise ships and guest houses.

The composition of the present invention may be applied to a wide variety of surfaces in science and technology applications. These include but are not limited to: instrument calibration; cameras; lenses; acoustic engineering; mobile phones; photography; printers & lithographers; scientific apparatus; flexible photo voltaics; glass fibres; lubricants; metals; metal polish and sprays; foggers & misting equipment; neon signs; Idpe film for agriculture; microscopes; powder coating; corrosion prevention & control, graffitti removal and fertiliser.

Other areas in which the compositions of the present invention could be used include: undertakers; sign makers; soffits & fascia boards; wood preservation; cashpoint machine keypads; commercial fishery linings; commercial angling pond linings; glass merchants; finishers and founders hire; naturism; nose filters; number plates; nurseries - horticulture; office equipment hire; office furniture; plant & machinery hire; pond linings; power flushing; pumps & pumping equipment; reclamation; waste paper merchants; water coolers / supplies; weed control; cemetries; body embalming / preservation; animal by-products; farriers; grooming; hay and straw merchants; hdpe milk bottles and headstones.

As mentioned above the composition of the present invention may be used in methods of combating a pathogen selected from bacteria, viruses, fungi, prions, algae and mixtures thereof.

It is particularly preferred that the composition of the present invention is useful at combating spores of such pathogens. By combating spores we mean that the composition may kill spores (have sporicidal activity) and/or may prevent or inhibit the growth of further spores at the locus.

Compositions of the present invention may be useful in methods of combating bacteria including one or more of *Clostridium difficile*, Methicillin-resistant *Staphylococcus aureus, Salmonella typhimurium, Leigonella* and *Listeria monocytogenes.*

Compositions of the present invention may be useful in methods of combating fungi including one or more of *Aspergillus niger* and *Candida albicans.*

Compositions of the present invention may be useful in methods of combating viruses including Influenza A Virus subtype H1N1.

Compositions of the present invention may be useful in methods of combating prion attachment of the surfaces of, for example, surgical instruments, thus disrupting the transmission of such species.

In the method of the present invention the composition of the present is applied to the locus, suitably a surface, by any suitable means. Preferably a substantially even surface coverage is achieved. Suitably sufficient composition is applied such that the surface appears visibly wet.

Suitably the biocidal response is achieved within 120 minutes of application, preferably within 90 minutes, more preferably within 75 minutes, preferably within 60 minutes. In some embodiments the biocidal response may be achieved with 30 minutes, within 20 minutes or within 10 minutes.

The biocidal response is preferably the killing of existing pathogens present at the locus upon application of the composition. The biocidal response may be targeted, that is directed against one or more particular pathogens. It may for example be directed against one or more of *Clostridium difficile*, Methicillin-resistant *Staphylococcus aureus, Salmonella typhimurium*, *Listeria monocytogenes, Aspergillus niger, Candida albicans,* and influenza A Virus subtype H1N1.

A particular advantage of compositions of the present invention is that they have long lasting efficacy. Suitably biocidal activity will be retained at the locus at which the composition has been applied for a period of at least 2 hours, preferably at least 4 hours, more preferably at least 6 hours, suitably at least 8 hours, preferably at least 12 hours, more preferably at least 18 hours and most preferably at least 24 hours.

Retention of biocidal activity suitably means that the growth of new or existing pathogens at the locus treated with the composition is prevented or inhibited. Retention of biocidial activity may be directed against one or more targeted pathogens. It may for example be directed against one or more of *Clostridium difficile*, Methicillin-resistant *Staphylococcus aureus, Salmonella typhimurium, Listeria monocytogenes, Aspergillus niger, Candida albicans,* and influenza A Virus subtype H1N1.

Without wishing to be bound by theory it is believed that the long lasting efficacy of the composition of the present invention may be due to the interaction of the compound of formula (II) with the surface to which it is applied. Many surfaces include hydroxy residues. It is believed that these hydroxy residues react with the silicon atom of the compound of formula (II), displacing methanol to provide a covalent silyl ether bond between the surface and the compound of formula (II) as shown in figure (VII):

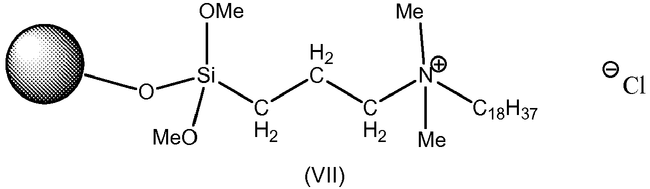

It is possible that once on the surface, silyl ether cross-links may be formed between adjacent molecules of formula (II).

Because of its reactivity with hydroxy groups, the compound of formula (II) has been previously found to be unstable in aqueous compositions. However the present inventors have found that the use of a hydrocarbyl-saccharide compound as provided by the present invention allows a stable aqueous composition to be prepared which can de used to deliver the compound of formula (II) to the surface.

The molecules of formula (II) which are bound to the surface themselves have biocidal properties. However it is believed that these compounds may interact with other biocidal components present in the composition. For example micelle formation may occur due to interaction between the hydrophobic chains of the different biocides present. Thus a plurality of biocidal components may be retained at a surface treated by a composition of the present invention. The interaction between the surface and the compound of formula (II) is particularly strong as this is believed to be due to the formation of a covalent bond.

According to a third aspect of the present invention there is provided a product comprising means to provide a composition of the first aspect and suitable packaging. The present invention thus provides a packaged biocidal composition.

Preferred features of the third aspect are as defined in relation to the first and second aspects.

The means to provide a composition of the first aspect may comprise a ready-to-use composition of the first aspect; it may comprise a concentrated composition which upon dilution forms a composition of the first aspect; or it may comprise two or more precursor compositions which upon admixture form a composition of the first aspect.

In embodiments in which the product of the third aspect comprises a concentrated composition this may be in the form of a solid (for example a powder), a liquid, paste or gel. The product suitably further comprises instructions for dilution, for example with water.

In embodiments in which the product of the third aspect comprises two or more precursor compositions these may each be provided in any suitable form, for example a solid, liquid, paste or gel. Instructions for preparation of a composition of the first aspect may be included.

In preferred embodiments the product of the third aspect preferably comprises a composition of the first aspect in ready-to-use form.

The composition may be provided in any suitable packaging. For example it may be provided in a bottle, jar, pot, tube or the like. In all embodiments instructions for use of the composition may be provided.

Preferably the product includes means for applying the composition to the locus, for example a surface. This may be included in the packaging, for example the packaging may be adapted to deliver the composition to the surface. Thus a trigger spray may be provided to deliver a liquid composition or a squeezy tube may be used to deliver a gel. In some embodiments the composition may be provided impregnated on a wipe.

The product may include separate applications means for example a brush, cloth or spatula for delivery of the composition to the locus.

According to a fourth aspect of the present invention there is provided the use of a composition of the first aspect to combat a pathogen at a locus.

Preferred features of the fourth aspect are as defined in relation to the first, second and third aspects.

The invention will now be further defined with reference to the following non-limiting examples:

### Example 1

A composition according to the present invention was prepared having the following active components:
4 wt% alcohol ethoxylate comprising a mixture of isomers of formula CH₃(CH₂)ₙO[CH₂CH₂O]ₘH where n = 9 or 11 and m = 4 to 8;
0.8 wt% alkyl polyglucoside comprising a mixture of isomers of formula: 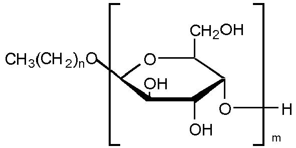
   where n = 7 or 9 and m = 1 to 5;
   1.0 wt% didecyldimethylammonium chloride;
   0.6 wt% polyhexamethylene biguanide hydrochloride;
   0.8 wt% of the compound of formula (I);
   0.03 wt% dye;
   Water to 100%

This composition was packaged in a bottle having a trigger spray and tested against a number of pathogens as detailed in examples 2 to 6.

### Example 2

The efficacy of the composition of example 1 against Clostridium difficile NCTC 11209 was tested using the standard method of EN 13704 - Quantitative suspension test for the evaluation of sporicidal activity of chemical disinfectants.

**The test conditions were as follows:**

| | |
|---|---|
| Interferring substance | - 0.3g/l bovine albimin solution |
| Contact time | - 60 min |
| Test Temperature | - 20°C ± 0.5°C |
| Neutralising solution | - 3% Tween 80, 3% Saponin, 0.1% Histidine, 0.1% Cysteine |
| Temperature of incubation | - 37°C ± 1°C |

**Test Results**

| Validation test | Clostridium difficile |
|---|---|
| Bacterial | Vc 366, 334 |
| suspension | Nv 6.50 x 10³ |
| Experimental | Vc 432, 444 |
| conditions | A 4.38 x 10² |
| Neutraliser control | Vc 440, 412 |
| | B 4.26 x 10² |
| Dilution- | Vc 408, 442 |
| neutralisation | C 6.25 x 10² |
| control | |
| Bacterial Test | 10⁻⁶ 452 488 |
| Suspension | 10-⁷ 54 34 |
| | N 4.55 x 10⁸ |
| Test results | |
| 60 min Vc | 0 |
| Na | <100 |
| R | >4.55 x 10⁶ |
| Log reduction | >6.66 |

| | |
|---|---|
| Vc = Viable Count. N = Number of cfu/ml of the bacterial test suspension. Nv = Number of cfu in bacterial suspension. R = Reduction in viability. Na = Number of cfu/ml in the test mixture | |

The results show that according to EN13704 the composition of example 1 possesses satisfactory sporicidal activity in 60 minutes at 20°C for Clostridium difficile NCTC 11209.

### Example 3

The efficacy of the composition of example 1 against Aspergillus niger NCTC 2275 and Candida albicans NCTC 3179 was tested using the standard method of BS EN 1650 Quantitative suspension test to determine fungicidal activity of chemical disinfectants.

**The test conditions were as follows:**

| | |
|---|---|
| Contact time | - 15 min |
| Test Temperature | - 20°C ± 0.5°C |
| Interferring substance | - 3.0g/l Bovine albumin |
| Neutralising solution | - 3% Tween 80, 3% Saponin, 0.1% Histidine, 0.1% Cysteine |
| Temperature of incubation | - 30°C ± 1°C |

**Test Results**

| Validation test | Candida albicans | Aspergillus niger |
|---|---|---|
| fungal suspension | Vc 385, 333 | Vc 134, 186 |
| | Nv 3.59 x 10³ | Nv 1.60 x 10³ |
| Experimental | Vc 318, 336 | Vc 166, 142 |
| conditions | A 3.27 x 10² | A 1.54 x 10² |
| Neutraliser control | Vc 308, 328 | Vc 155, 138 |
| | C 3.18 x 10² | C 1.46 x 10² |
| Dilution- | Vc 332, 310 | Vc 152, 110 |
| neutralisation control | C 3.21 x 10² | C 1.31 x 10² |
| Fungal Test | 10⁻⁶ 212, 300 | 10⁻⁶ 112, 134 |
| Suspension | 10⁻⁷ 48 27 | 10⁻⁷ 26 19 |
| | N 3.15 x 10⁸ | N 1.74 x 10⁸ |
| Test results | | |
| Neat Vc | 0 | 0 |
| Na | <100 | <100 |
| R | >3.15 x 10⁶ | >1.74 x 10⁶ |
| Log reduction | >6.50 | >6.24 |

| | | |
|---|---|---|
| Vc = Viable Count. N = Number of cfu/ml of the fungal test suspension. Nv = Number of cfu in fungal suspension. R = Reduction in viability. Na = Number of cfu/ml in the test mixture | | |

The results show that according to EN1650 the composition of example 1 possesses satisfactory fungicidal activity in 15 minutes at 20°C for Aspergillus niger NCTC 2275 and Candida albicans NCTC 3179.

### Example 4

The efficacy of the composition of example 1 against Methycillin Resistant Staphylococcus Aureus ATCC 33591 was tested using the standard method of BS EN 13727 Quantitative suspension test to determine bactericidal activity of chemical disinfectants.

**The test conditions were as follows:**

| | |
|---|---|
| Contact time | - 5 min |
| Test Temperature | - 20°C ± 0.5°C |
| Interferring substance | - 3.0g/l Bovine album, 3.0ml/l Sheep erythrocytes |
| Neutralising solution | - 3% Tween 80, 3% Saponin, 0.1% Histidine, 0.1% Cysteine |
| Temperature of incubation | - 30°C ± 1°C |

**Test Results**

| Validation test | MRSA |
|---|---|
| Bacterial | Vc 622, 646 |
| suspension | Nv 6.34 x 10³ |
| Experimental | Vc 618, 652 |
| conditions | A 6.35 x 10² |
| Neutraliser control | Vc 604, 622 |
| | B 6.13 x 10² |
| Dilution- | Vc 600, 642 |
| neutralisation control | C 6.21 x 10² |
| Bacterial Test | 10 288, 432 |
| Suspension | 10⁻⁷ 35 21 |
| | N 3.20 x 10⁸ |
| Test results | |
| Neat Vc | 0 |
| Na | <100 |
| R | >3.20 x 10⁶ |
| Log reduction | >6.50 |

| | |
|---|---|
| Vc = Viable Count. N = Number of cfu/ml of the bacterial test suspension. Nv = Number of cfu in bacterial suspension. R = Reduction in viability. Na = Number of cfu/ml in the test mixture | |

The results show that according to EN13727 the composition of example 1 possesses satisfactory bactericidal activity in 5 minutes at 20°C for Methycillin Resistant Staphylococcus Aureus ATCC 33591.

### Example 5

The efficacy of the composition of example 1 against Salmonella typhimurium ATCC 14028 and Listeria monocytogenes NCTC 11994 was tested using the standard method of BS EN 1276 Quantitative suspension test to determine bactericidal activity of chemical disinfectants.

**The test conditions were as follows:**

| | |
|---|---|
| Contact time | - 5 min |
| Test Temperature | - 20°C ± 0.5°C |
| Interferring substance | - 3.0g/l Bovine albumin |
| Neutralising solution | - 3% Tween 80, 3% Saponin, 0.1% Histidine, 0.1% Cysteine |
| Temperature of incubation | - 30°C ± 1°C |

**Test Results**

| Validation test | Listeria monocytogenes | Salmonella typhimurium |
|---|---|---|
| Bacterial | Vc 366, 382 | Vc 254 242 |
| suspension | Nv 3.74 x 10³ | Nv 2.48 x 10³ |
| Experimental | Vc 333, 370 A | Vc 222, 208 |
| conditions | 3.51 x 10² | A 2.15 x 10² |
| Neutraliser control | Vc 380, 322 B | Vc 252, 230 |
| | 3.51 x 10² | B 2.41 x 10² |
| Dilution- | Vc 346, 318 | Vc 288, 216 |
| neutralisation control | C 3.32 x 10² | C 2.52 x 10² |
| Bacterial Test | 10⁻⁶ 468 536 | 10⁻⁶ 194 238 |
| Suspension | 10⁻⁷ 51 70 | 10⁻⁷ 17 26 |
| | N 5.53 x 10⁸ | N 2.15 x 10⁸ |
| Test results | | |
| Neat Vc | 0 | 0 |
| Na | <100 | <100 |
| R | >5.53 x 10⁶ | >2.15 x 10⁶ |
| Log reduction | >6.74 | >6.33 |

| | | |
|---|---|---|
| Vc = Viable Count. N = Number of cfu/ml of the bacterial test suspension. Nv = Number of cfu in bacterial suspension. R = Reduction in viability. Na = Number of cfu/ml in the test mixture | | |

The results show that according to EN1276 the composition of example 1 possesses possesses satisfactory bactericidal activity in 5 minutes at 20°C for Salmonella typhimurium ATCC 14028 and Listeria monocytogenes NCTC 11994.

### Example 6

**The efficacy of the composition of example 1 against Influenza A Virus subtype H1N1 was tested using a pre-screen protocol (pre-EN 14436). The test conditions were as follows:**

| | | |
|---|---|---|
| Contact time | 1 min | 5 min |
| Concentration | 80% | 80% |
| Conditions | Clean | Clean |
| Cytotoxicity Log₁₀CD₅₀/ml | 4.50 | 4.50 |
| Virus control Log₁₀TCID₅₀/ml | 7.13 | 7.13 |
| Test results | | |
| Virus titre Log₁₀TCID₅₀/ml | ≤4.50 | ≤4.50 |
| Reduction factor | ≤2.63 | ≤2.63 |

The results show that the composition of example demonstrates activity against Influenza A virus subtype H1N1 after 1 minute contact time.

### Example 7

A composition according to the present invention was prepared having the following active components:
3.3 wt % alcohol ethoxylate comprising a mixture of isomers of formula CH₃(CH₂)ₙO[CH₂CH₂O]ₘH where n = 9 or 11 and m = 4 to 8;
0.8 wt% alkyl polyglucoside comprising a mixture of isomers of formula: 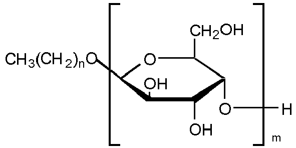
   where n = 7 or 9 and m = 1 to 5;
   1.0 wt% benzyl dimethyl alkyl ammonium chloride wherein alkyl represents a mixture of C₁₂ to C₁₆ alkyl groups;
   0.6 wt% polyhexamethylene biguanide hydrochloride;
   0.8 wt% of the compound of formula (I);
   0.02 wt% dye;
   Water to 100%

### Example 8

**The efficiency of the composition of example 7 was tested against the microorganisms listed in table 1, by following the indicated standard EN test method:**

| **EN Test** | **Organism** | **Contact time/min** | **Log reduction** |
|---|---|---|---|
| 1276 | Pseudomonas aeruginosa NCIMB 10421 | 5 | >6.30 |
| 1276 | Escherichia coli NCTC 10418 | 5 | >6.49 |
| 1276 | Staphylococcus aureus NCTC 10788 | 5 | >6.47 |
| 1276 | Enterococcus hirae NCIMB 8192 | 5 | >6.26 |
| 1276 | Salmonella typhimurium NCTC 12023 | 5 | >6.43 |
| 1275 | Aspergillus niger NCPF 2275 | 15 | >6.57 |
| 1275 | Candida albicans NCPF 3179 | 15 | >6.38 |
| 13624 | Trichophyton mentagrophytes NCPF 0224 | 15 | >6.60 |
| 13623 | Legionella pneumophila NCTC 12821 | 60 | >6.48 |
| 13704 | Bacillus subtilis NCIMB 8054 | 60 | >6.68 |
| 13704 | Clostridium difficile NCTC 11209 | 60 | 5.72 |

As the results illustrate, the composition demonstrated excellent activity against all of these microorganisms.

## Claims

1. An aqueous biocidal composition comprising:
(a) a compound of formula (II): 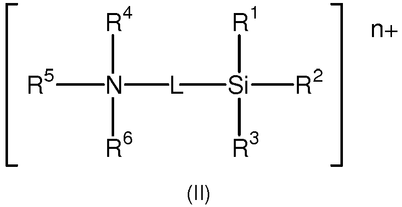 or a salt thereof wherein L is a linking group; each of R¹, R² and R³ is independently selected from an optionally substituted alkyl, alkenyl, aryl or alkoxy group; R⁴ is oxygen or an optionally substituted alkyl, alkenyl or aryl group; each of R⁵ and R⁶ is an optionally substituted alkyl, alkenyl or aryl group; and n is 0 or 1;
(b) a hydrocarbyl-saccharide compound; and
(c) at least one cationic biocide; and one or more non-ionic surfactants;
wherein the molar ratio of component (b) to component (a) is at least 0.5:1, and wherein component (c) comprises a quaternary ammonium salt and a guanidine based compound; and wherein L is a group of formula (CH₂)ₙ wherein n is from 2 to 5.

2. An aqueous biocidal composition according to claim 1 wherein each of R¹, R² and R³ is a C₁ to C₄ alkoxy group.

3. An aqueous biocidal composition according to any preceding claim wherein R⁴ is a C₁ to C₄ alkyl group.

4. An aqueous biocidal composition according to any preceding claim wherein each of R⁵ and R⁶ is a fluoroalkyl group having 6 to 16 carbon atoms.

5. An aqueous biocidal composition according to any preceding claim wherein R⁶ is a C₁ to C₄ alkyl group and R⁵ is a C₈ to C₃₀ alkyl group.

6. An aqueous biocidal composition according to any preceding claim wherein component (b) comprises a compound of formula (IV): 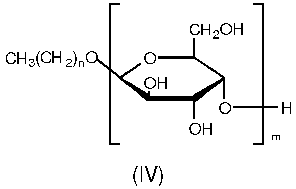 wherein n is from 5 to 12, and m is from 1 to 6.

7. An aqueous biocidal composition according to any preceding claim which comprises at least 90 wt% water.

8. An aqueous biocidal composition according to any preceding claim wherein the one or more non-ionic surfactants comprise an alcohol alkoxylate compound.

9. An aqueous biocidal composition according to any preceding claim wherein the non-ionic surfactant comprises a compound of formula CH₃(CH₂)ₙO (CH₂CH₂O)ₘH wherein n is from 5 to 20 and m is from 1 to 12.

10. A method of combating a pathogen at a locus, the method comprising applying to the locus a composition as claimed in any preceding claim.

11. A method according to claim 10 wherein the pathogen is selected from bacteria, viruses, fungi, prions, algae and mixtures thereof.

12. A packaged biocidal composition comprising a composition according to any of claims 1 to 9 and means for applying the composition to a locus.

## Patentansprüche

1. Wässrige biozide Zusammensetzung, umfassend:
(a) eine Verbindung der Formel (II): 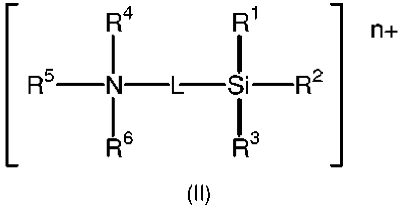
oder ein Salz davon, wobei L eine Linkergruppe ist; jede von R¹, R² und R³ unabhängig ausgewählt ist aus einer gegebenenfalls substituierten Alkyl-, Alkenyl-, Aryl- oder Alkoxygruppe;
R⁴ Sauerstoff oder eine gegebenenfalls substituierte Alkyl-, Alkenyl- oder Arylgruppe ist; jede von R⁵ und R⁶ eine gegebenenfalls substituierte Alkyl-, Alkenyl- oder Arylgruppe ist; und n 0 oder 1 ist;
(b) eine Kohlenwasserstoffsaccharidverbindung und
(c) mindestens ein kationisches Biozid und ein oder mehrere nichtionische Tenside;
wobei das Molverhältnis von Komponente (b) zu Komponente (a) mindestens 0,5:1 beträgt, und wobei Komponente (c) ein quaternäres Ammoniumsalz und eine Verbindung auf Guanidinbasis umfasst; und wobei L eine Gruppe mit der Formel (CH₂)ₙ ist, wobei n 2 bis 5 ist.

2. Wässrige biozide Zusammensetzung nach Anspruch 1, wobei jede von R¹, R² und R³ eine C₁- bis C₄-Alkoxy-gruppe ist.

3. Wässrige biozide Zusammensetzung nach einem der vorhergehenden Ansprüche, wobei R⁴ eine C₁- bis C₄-Alkylgruppe ist.

4. Wässrige biozide Zusammensetzung nach einem der vorhergehenden Ansprüche, wobei jede von R⁵ und R⁶ eine Fluoralkylgruppe mit 6 bis 16 Kohlenstoffatomen ist.

5. Wässrige biozide Zusammensetzung nach einem der vorhergehenden Ansprüche, wobei R⁶ eine C₁- bis C₄-Alkylgruppe ist und R⁵ eine C₈- bis C₃₀-Alkylgruppe ist.

6. Wässrige biozide Zusammensetzung nach einem der vorhergehenden Ansprüche, wobei Komponente (b) eine Verbindung der Formel (IV) umfasst: 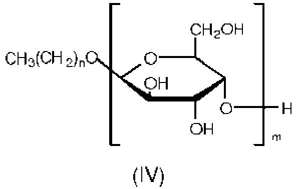 wobei n 5 bis 12 ist und m 1 bis 6 ist.

7. Wässrige biozide Zusammensetzung nach einem der vorhergehenden Ansprüche, die mindestens 90 Gew.% Wasser umfasst.

8. Wässrige biozide Zusammensetzung nach einem der vorhergehenden Ansprüche, wobei das eine oder die mehreren nichtionischen Tenside eine Alkoholalkoxylatverbindung umfassen.

9. Wässrige biozide Zusammensetzung nach einem der vorhergehenden Ansprüche, wobei das nichtionische Tensid eine Verbindung der Formel CH₃(CH₂)ₙO(CH₂CH₂O)ₘH umfasst, wobei n 5 bis 20 beträgt und m 1 bis 12 beträgt.

10. Verfahren zum Bekämpfen eines Pathogens an einem Ort, wobei das Verfahren das Aufbringen einer Zusammensetzung gemäß einem der vorhergehenden Ansprüche auf den Ort umfasst.

11. Verfahren nach Anspruch 10, wobei das Pathogen ausgewählt ist aus Bakterien, Viren, Pilzen, Prionen, Algen und Mischungen davon.

12. Verpackte biozide Zusammensetzung, die eine Zusammensetzung nach einem der Ansprüche 1 bis 9 und Mittel zum Aufbringen der Zusammensetzung auf einen Ort umfasst.

## Revendications

1. Composition biocide aqueuse, comprenant:
(a) un composé de la formule (II): 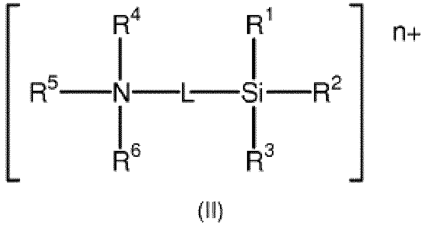 ou un sel de celui-ci, dans laquelle L est un groupe de liaison; chacun de R¹, R² et R³ est de façon indépendante sélectionné parmi un groupe alkyle, alcényle, aryle ou alcoxy optionnellement substitué; R⁴ est un atome d'oxygène ou un groupe alkyle, alcényle ou aryle optionnellement substitué; chacun de R⁵ et R⁶ est un groupe alkyle, alcényle ou aryle optionnellement substitué; et n est 0 ou 1;
(b) un composé hydrocarbyle saccharide; et
(c) au moins un biocide cationique; et un ou plusieurs tensioactifs non ioniques;
dans laquelle le rapport molaire du composant (b) au composant (a) est au moins 0,5:1, et dans laquelle le composant (c) comprend un sel d'ammonium quaternaire et un composé à base de guanidine; et dans laquelle L est un groupe de formule (CH₂)ₙ, dans laquelle n est de 2 à 5.

2. Composition biocide aqueuse selon la revendication 1, dans laquelle chacun de R¹, R² et R³ est un groupe alcoxy C₁ à C₄.

3. Composition biocide aqueuse selon l'une quelconque des revendications précédentes, dans laquelle R⁴ est un groupe alkyle C₁ à C₄.

4. Composition biocide aqueuse selon l'une quelconque des revendications précédentes, dans laquelle chacun de R⁵ et R⁶ est un groupe fluoroalkyle comprenant 6 à 16 atomes de carbone.

5. Composition biocide aqueuse selon l'une quelconque des revendications précédentes, dans laquelle R⁶ est un groupe alkyle C₁ à C₄ et R⁵ est un groupe alkyle C₈ à C₃₀.

6. Composition biocide aqueuse selon l'une quelconque des revendications précédentes, dans laquelle le composant (b) comprend un composé de la formule (IV): 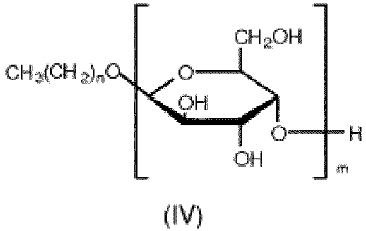 dans laquelle n est de 5 à 12, et m est de 1 à 6.

7. Composition biocide aqueuse selon l'une quelconque des revendications précédentes, qui contient au moins 90 % en poids d'eau.

8. Composition biocide aqueuse selon l'une quelconque des revendications précédentes, dans laquelle lesdits un ou plusieurs tensioactifs non ioniques comprennent un composé alcoxylate d'alcool.

9. Composition biocide aqueuse selon l'une quelconque des revendications précédentes, dans laquelle le tensioactif non ionique comprend un composé de la formule CH₃(CH₂)ₙO(CH₂CH₂O)ₘH, dans laquelle n est de 5 à 20 et m est de 1 à 12.

10. Procédé pour combattre un agent pathogène à un locus, le procédé comprenant l'application au locus d'une composition selon l'une quelconque des revendications précédentes.

11. Procédé selon la revendication 10, dans lequel l'agent pathogène est sélectionné parmi des bactéries, des virus, des champignons, des prions, des algues et des mélanges de ceux-ci.

12. Composition biocide conditionnée comprenant une composition selon l'une quelconque des revendications 1 à 9 et des moyens pour appliquer la composition à un locus.
